# EUROPÄISCHE PATENTSCHRIFT

(11) **EP 3 360 074 B1**
(45) Veröffentlichungstag und Bekanntmachung des Hinweises auf die Patenterteilung: **15.07.2020**
(21) Anmeldenummer: 16754246.3
(22) Anmeldetag: 11.08.2016
(51) Int. Cl.: G06K 9/00, G06K 9/20, G06K 9/03

(54) **FUNKTIONSFÄHIGKEITSPRÜFUNG EINES FAHRERASSISTENZSYSTEMS**
OPERABILITY CHECK FOR DRIVER ASSISTANCE SYSTEMS
CONTRÔLE DE BON FONCTIONNEMENT D'UNE AIDE À LA CONDUITE AUTOMOBILE

(30) Priorität: 08.10.2015 DE 102015219496
(43) Veröffentlichungstag der Anmeldung: 15.08.2018
(73) Patentinhaber: Robert Bosch GmbH, 70442 Stuttgart (DE)
(72) Erfinder: MUELLER, Alexander, 74321 Bietigheim (DE)
(86) Internationale Anmeldenummer: PCT/EP2016/069103
(87) Internationale Veröffentlichungsnummer: WO 2017/059991

(56) Entgegenhaltungen:
- EP-A2- 1 323 579
- EP-A2- 2 050 637
- DE-A1- 19 837 160
- DE-A1- 19 957 210
- DE-A1-102004 049 558
- DE-A1-102007 061 725
- DE-A1-102014 002 134

## Beschreibung

Die Erfindung betrifft ein Verfahren zum Bestimmen der Funktionsfähigkeit eines Fahrerassistenzsystems eines Fahrzeugs, insbesondere Kraftfahrzeugs, wobei das Fahrerassistenzsystem wenigsten einen Lichtsensor und wenigstens einen Kamerasensor aufweist, die an dem Fahrzeug zum Erfassen zumindest im Wesentlichen derselben Umgebung ausgebildet und/oder ausgerichtet sind.

Ferner betrifft die Erfindung eine Vorrichtung zum Durchführen des Verfahrens sowie ein Fahrerassistenzsystem mit einer derartigen Vorrichtung und ein Kraftfahrzeug.

### Stand der Technik

Heutige Kraftfahrzeuge werden vermehrt mit Lichtsensoren und Kamerasensoren ausgestattet, welche der Erfassung einer äußeren oder inneren Umgebung dienen. So werden Lichtsensoren meist in einem vorderen Bereich des Fahrzeugs, insbesondere hinter einem oberen Teil einer Windschutzscheibe, befestigt, um beispielsweise die Lichtverhältnisse der äußeren Umgebung des Fahrzeugs zu prüfen. Mittels der Prüfung und einer Auswertung der Daten, die der Lichtsensor oder der Kamerasensor liefern, insbesondere durch ein Steuergerät, wird dann beispielsweise eine Beleuchtungseinrichtung des Fahrzeugs, insbesondere Scheinwerfer, aktiviert. Kamerasensoren, die beispielsweise einen Abstand zu einem voraus fahrenden Fahrzeug erfassen, werden ebenso in einem vorderen Bereich des Fahrzeugs angebracht. Die Erfassung der äußeren und/oder inneren Umgebung liefert somit einem Fahrerassistenzsystem Informationen darüber, ob beispielsweise eine Gefahr im Verkehrsgeschehen droht, ob eine Aktivierung der Scheinwerfer erforderlich ist oder ob ein Fahrer abgelenkt oder müde ist. Bei Anwendungen, welche die Sicherheit der Fahrzeuginsassen zum Gegenstand haben, ist die Funktionsfähigkeit der Lichtsensoren und Kamerasensoren, und damit die des Fahrerassistenzsystems, von hoher Bedeutung.

Die Offenlegungsschrift EP 2 050 637 A2 beschreibt ein Verfahren zum Betreiben eines Sensormoduls mit einer optischen Regensensoreinheit und einem in das Sensormodul integrierten optischen Richtungssensor. Die Regensensoreinheit und der Richtungssensor weisen einen zumindest teilweise übereinstimmenden Erfassungsbereich auf, wobei vorgesehen ist, dass vom Regensensor erfasste Signale zumindest teilweise mit denen des Richtungssensors plausibilisiert werden können.

### Offenbarung der Erfindung

Erfindungsgemäß ist vorgesehen, dass zumindest ein durch den Lichtsensor ermittelter erster Helligkeitswert mit zumindest einem durch den Kamerasensor ermittelten zweiten Helligkeitswert verglichen wird, und dass durch den Vergleich der Helligkeitswerte die Funktionsfähigkeit des Fahrerassistenzsystems bestimmt wird. Das erfindungsgemäße Verfahren mit den Merkmalen des Anspruchs 1 hat den Vorteil, dass die Bestimmung der Funktionsfähigkeit des Fahrerassistenzsystems auf Mitteln beruht, die schon an dem Fahrzeug vorhanden sind. Somit besteht keine Notwendigkeit, zusätzliche Prüfeinrichtungen für den Lichtsensor und/oder den Kamerasensor zu verwenden. Es ist davon auszugehen, dass Lichtsensoren und/oder Kamerasensoren gleiche oder ähnliche Helligkeitswerte ermitteln, wenn sie zur Erfassung derselben Umgebung, insbesondere eines Bereichs derselben Umgebung, angeordnet und/oder ausgerichtet sind und ein fehlerfreier Betrieb der Sensoren gegeben ist. Eine Abweichung der Helligkeitswerte wird somit insbesondere dann auftreten, wenn ein fehlerfreier Betrieb nicht mehr vorliegt. Für eine Durchführung des Verfahrens wird bevorzugt der Lichtsensor mit dem Kamerasensor verglichen und der erste Helligkeitswert als Referenzwert gewählt. Alternativ kann auch der Kamerasensor mit dem Lichtsensor verglichen werden, wobei der zweite Helligkeitswert als Referenzwert gewählt wird. Bevorzugt wird in Abhängigkeit der äußeren Umgebung der plausiblere Helligkeitswert als Referenzwert bestimmt. Registriert beispielsweise der Lichtsensor bei einer Tunneleinfahrt an einem sonnigen Tag eine Verringerung des ersten Helligkeitswertes, während der zweite Helligkeitswert des Kamerasensors gleich bleibt, so wird auf eine Fehlfunktion des Kamerasensors geschlossen.

Gemäß einer bevorzugten Weiterbildung der Erfindung ist vorgesehen, dass ein erster Verlauf von ersten zeitlich nacheinander erfassten Helligkeitswerten des Lichtsensors und ein zweiter Verlauf von zweiten nacheinander erfassten Helligkeitswerten des Kamerasensors ermittelt und miteinander verglichen werden, um die Funktionsfähigkeit des Fahrerassistenzsystems zu bestimmen. Der Vorteil an dieser Ausführungsform ist, dass auf die Funktionsfähigkeit des Fahrerassistenzsystems geschlossen wird, solange der erste Verlauf und der zweite Verlauf gleich oder ähnlich sind. So ist beispielsweise bei einer Tunneleinfahrt oder -ausfahrt an einem sonnigen Tag davon auszugehen, dass Lichtsensor und Kamerasensor auf eine Änderung von hell zu dunkel oder dunkel zu hell so ansprechen, dass der erste Verlauf und der zweite Verlauf insbesondere eine ähnliche Steigung oder zumindest eine gleiche Richtung der Steigung aufweisen. Eine wesentliche Abweichung zwischen den Verläufen zeigt dabei eine Fehlfunktion des Lichtsensors oder Kamerasensors an. Dabei wird bevorzugt der Verlauf als Referenzverlauf bestimmt, welcher in Abhängigkeit der äußeren Umgebung der plausiblere ist.

Vorzugsweise ist vorgesehen, dass bei dem Vergleich der Verläufe nur dann auf die Funktionsfähigkeit des Fahrerassistenzsystems erkannt wird, wenn die Verläufe zumindest im Wesentlichen zur gleichen Zeit eine zumindest im Wesentlichen gleiche Steigungsänderung aufweisen. Der Vorteil an dieser Ausführungsform ist, dass insbesondere dann auf eine Funktionsfähigkeit geschlossen wird, wenn die Steigungsänderungen der Verläufe in dieselbe Richtung weisen und dieselbe oder nahezu dieselbe Steigung aufweisen. Wird eine Helligkeitsveränderung von beiden Sensoren unterschiedlich aufgefasst, wird beispielsweise seitens des Lichtsensors eine erste Steigung, welche im Beispiel einer Referenzsteigung entspricht, abweichend zu einer zweiten Steigung des Kamerasensors bestimmt, so wird darauf erkannt, dass der Kamerasensor eine Fehlfunktion aufweist.

Erfindungsgemäß ist vorgesehen, dass die erfassten Helligkeitswerte von zumindest zwei Lichtsensoren und/oder von zumindest zwei Kamerasensoren jeweils miteinander verglichen werden, und dass dann, wenn bei dem Vergleich eine Abweichung der erfassten Helligkeitswerte zueinander erkannt wird, die größer als ein vorgebbarer Grenzwert ist, auf eine Fehlfunktion erkannt wird. Der Vorteil an dieser Ausführungsform des Verfahrens ist, dass die Lichtsensoren insbesondere unabhängig von den Kamerasensoren verglichen werden und umgekehrt. Liegen beispielsweise zwei erste Helligkeitswerte von zwei Lichtsensoren vor und befindet sich deren Abweichung zueinander unterhalb des Grenzwertes, so wird auf die Funktionsfähigkeit der Lichtsensoren geschlossen. Andernfalls, wenn sich die Abweichung oberhalb des Grenzwertes befindet, wird bevorzugt ein dritter erster Helligkeitswert für einen Vergleich hinzugezogen. Stimmt dieser mit einem der ersten beiden Helligkeitswerte im Wesentlichen überein, liegt also die Abweichung zueinander unterhalb des Grenzwertes, so wird daraus gefolgert, dass an dem Lichtsensor, dessen erfasster Helligkeitswert nicht mit den Helligkeitswerten der beiden anderen übereinstimmt, eine Fehlfunktion vorliegt. Gemäß einer weiteren vorteilhaften Ausführungsform des Verfahrens können auch zwei erste Helligkeitswerte und zwei zweite Helligkeitswerte miteinander verglichen werden. Befindet sich die Abweichung von zwei ersten Helligkeitswerten und einem der zwei zweiten Helligkeitswerte unterhalb des Grenzwertes, so lässt sich anhand dessen schlussfolgern, dass der eine zweite Helligkeitswert, der von den drei anderen Helligkeitswerten abweicht, von dem Sensor ermittelt wird, der eine Fehlfunktion aufweist. Weitere bevorzugte Ausführungsformen betreffen einen Vergleich von mindestens zwei ersten Helligkeitswerten mit mindestens einem zweiten Helligkeitswert oder einen Vergleich von mindestens einem ersten Helligkeitswert mit mindestens zwei zweiten Helligkeitswerten. Durch den Grenzwert wird berücksichtigt, dass eine geringe, insbesondere produktionsbedingte Abweichung zwischen zwei gleichen Sensoren in sensorspezifischen Kenngrößen, wie zum Beispiel der Empfindlichkeit oder der Ansprechzeit, nicht als Fehlfunktion erkannt wird.

Gemäß einer bevorzugten Weiterbildung der Erfindung ist vorgesehen, dass aus den von zumindest zwei Lichtsensoren, die zu der Erfassung derselben Umgebung ausgerichtet sind, gleichzeitig erfassten ersten Helligkeitswerten der erste Helligkeitswert bestimmt wird. Der Vorteil dieser Ausführungsform ist, dass durch die Bestimmung des ersten Helligkeitswertes, insbesondere als erster Mittelwert, eine geringe, insbesondere produktionsbedingte Abweichung, die zwischen zumindest zwei einzelnen ersten Helligkeitswerten besteht, ausgeglichen wird. Bevorzugt wird der erste Mittelwert mit einem zweiten Helligkeitswert eines Kamerasensors verglichen oder mit einem zweiten Helligkeitswert, der von mindestens zwei Kamerasensoren gebildet wird.

Besonders bevorzugt ist vorgesehen, dass aus den von zumindest zwei Kamerasensoren, die zu der Erfassung zumindest im Wesentlichen derselben Umgebung ausgerichtet sind, gleichzeitig erfassten zweiten Helligkeitswerten der zweite Helligkeitswert bestimmt wird. Der Vorteil dieser Ausführungsform ist, dass durch die Bestimmung des zweiten Helligkeitswertes, insbesondere eines zweiten Mittelwertes, eine geringe, insbesondere produktionsbedingte Abweichung, die zwischen zumindest zwei einzelnen zweiten Helligkeitswerten besteht, ausgeglichen wird. Bevorzugt wird der zweite Mittelwert mit einem ersten Helligkeitswert eines Lichtsensors verglichen oder mit einem ersten Helligkeitswert, der von mindestens zwei Lichtsensoren gebildet wird. Bevorzugt werden die ersten Mittelwerte und die zweiten Mittelwerten miteinander verglichen.

Gemäß einer bevorzugten Weiterbildung der Erfindung ist vorgesehen, dass in Abhängigkeit von Daten eines satellitengestützten Navigationssystems und/oder einer aktuellen Uhrzeit ein Soll-Helligkeitswert ermittelt wird, und dass der erste Helligkeitswert und/oder der zweite Helligkeitswert mit dem Soll-Helligkeitswert verglichen wird, um die Funktionsfähigkeit des Fahrerassistenzsystems zu bestimmen. Der Vorteil an dieser Ausführungsform ist, dass damit ein zusätzlicher Helligkeitswert zur Verfügung steht, der mit den gemessenen ersten und zweiten Helligkeitswerten verglichen wird. Hierbei wird mit Hilfe des Soll-Helligkeitswerts der plausiblere von erstem und von zweitem Helligkeitswert bestimmt. Dieser ist dann der Referenzwert. Stimmen beispielsweise der erste Helligkeitswert und der Soll-Helligkeitswert bei einer Nachtfahrt miteinander überein, der zweite Helligkeitswert weicht jedoch davon ab, so wird daraus geschlossen, dass aufgrund der Abweichung des zweiten Helligkeitswertes bei dem Kamerasensor eine Fehlfunktion vorliegt.

Die erfindungsgemäße Vorrichtung mit den Merkmalen des Anspruchs 7 zeichnet sich durch ein speziell hergerichtetes Steuergerät aus, das bei bestimmungsgemäßem Gebrauch das Verfahren nach einem der Ansprüche 1 bis 6 durchführt. Weitere Vorteile und bevorzugte Merkmale ergeben sich aus dem zuvor Beschriebenen sowie aus den Ansprüchen.

Das erfindungsgemäße Fahrerassistenzsystem mit den Merkmalen des Anspruchs 8 zeichnet sich durch eine speziell hergerichtete Vorrichtung aus, die bei bestimmungsgemäßem Gebrauch das Verfahren nach einem der Ansprüche 1 bis 6 durchführt.

Das erfindungsgemäße Fahrzeug, insbesondere Kraftfahrzeug, mit den Merkmalen des Anspruchs 9 zeichnet sich durch das erfindungsgemäße Fahrerassistenzsystem aus.

Im Folgenden soll die Erfindung anhand eines Ausführungsbeispiels näher erläutert werden. Dazu zeigen im Folgenden
- Figur 1: eine schematische Darstellung eines Fahrzeugs mit einem Fahrerassistenzsystem gemäß eines Ausführungsbeispiels und
- Figur 2: ein Ablaufschema zur Bestimmung der Funktionsfähigkeit von Licht- und/oder Kamerasensoren.

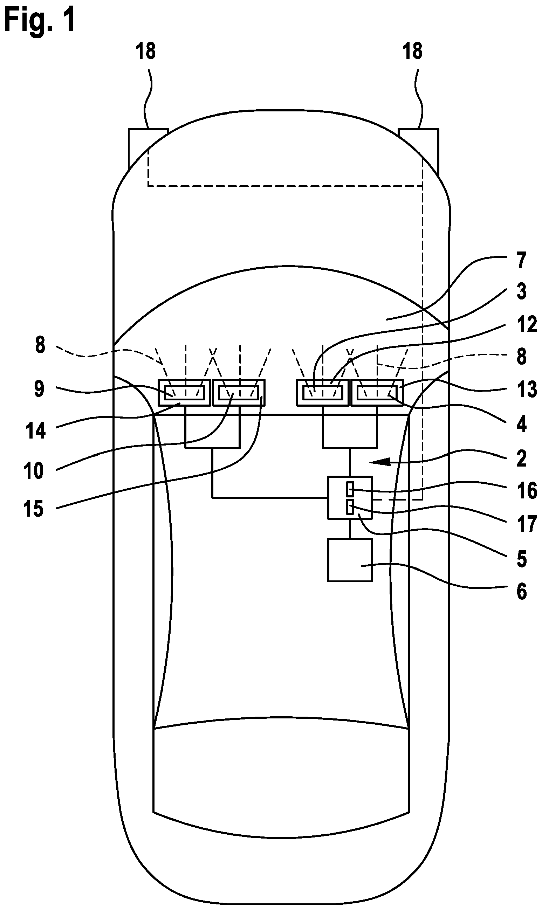

Figur 1 zeigt in einer vereinfachten Darstellung ein Fahrzeug 1 mit einem Fahrerassistenzsystem 2. Das in dem Fahrzeug 1 installierte Fahrerassistenzsystem 2 weist einen Lichtsensor 3, einen Kamerasensor 4 und ein Steuergerät 5 auf. Das Steuergerät 5 ist mit einer Warneinrichtung 6 verbunden. Der Lichtsensor 3 und der Kamerasensor 4 sind in VorwärtsfahrtRichtung nach vorne weisend an einer Innenseite einer Windschutzscheibe 7 des Fahrzeugs 1 angebracht. Dabei sind der Lichtsensor 3 und der Kamerasensor 4 in dem Fahrzeug 1 so ausgerichtet, dass sie dieselbe oder nahezu dieselbe äußere Umgebung des Fahrzeugs 1 erfassen, wie durch gestrichelte Linien 8 angedeutet. Optional sind ein zusätzlicher Lichtsensor 9 und ein zusätzlicher Kamerasensor 10 an einer Innenseite der Windschutzscheibe 7 so angebracht, dass sie dieselbe oder nahezu dieselbe äußere Umgebung des Fahrzeugs 1 erfassen. Alternativ können die Lichtsensor 3 und 9 und die Kamerasensoren 4 und 10 nach innen weisen, so dass sie eine innere Umgebung des Fahrzeugs 1 erfassen. Die Lichtsensoren 3, 9 und die Kamerasensoren 4, 10 sind in Gehäusen 12, 13, 14, 15 befestigt. Das Steuergerät 5 weist eine Steuereinheit 16 und einen insbesondere nicht-flüchtigen Speicher 17 auf. Eine Beleuchtungseinrichtung 18 ist mit dem Steuergerät 5 verbunden.

In Abhängigkeit der äußeren Umgebung des Fahrzeugs 1 erfasst der Lichtsensor 3 einen ersten Helligkeitswert und der Kamerasensor 4 einen zweiten Helligkeitswert. Der erste Helligkeitswert und der zweite Helligkeitswert werden an das Steuergerät 5 übertragen. Erfasst das Steuergerät 5, dass der erste Helligkeitswert oder der zweite Helligkeitswert abnehmen, so erfolgt üblicherweise ein Regeleingriff des Fahrerassistenzsystems 2 durch beispielsweise eine Aktivierung der Beleuchtungseinrichtung 18. Der Kamerasensor 4 ist in dem vorliegenden Ausführungsbeispiel eine CCD-Kamera oder CMOS-Kamera oder auch ein anderes bekanntes Mittel.

Für die vorliegende Ausführung des Verfahrens werden der erste Helligkeitswert und der zweite Helligkeitswert an das Steuergerät 5 übertragen und dort miteinander verglichen. Dazu werden zumindest ein Berechnungsvorgang und ein Vergleichsvorgang durch das Steuergerät 5 durchgeführt. Wird durch den Vergleichsvorgang eine Abweichung zwischen dem ersten Helligkeitswert und dem zweiten Helligkeitswert ermittelt, so erfolgt beispielsweise eine Ausgabe eines Warnsignals durch die Warneinrichtung 6.

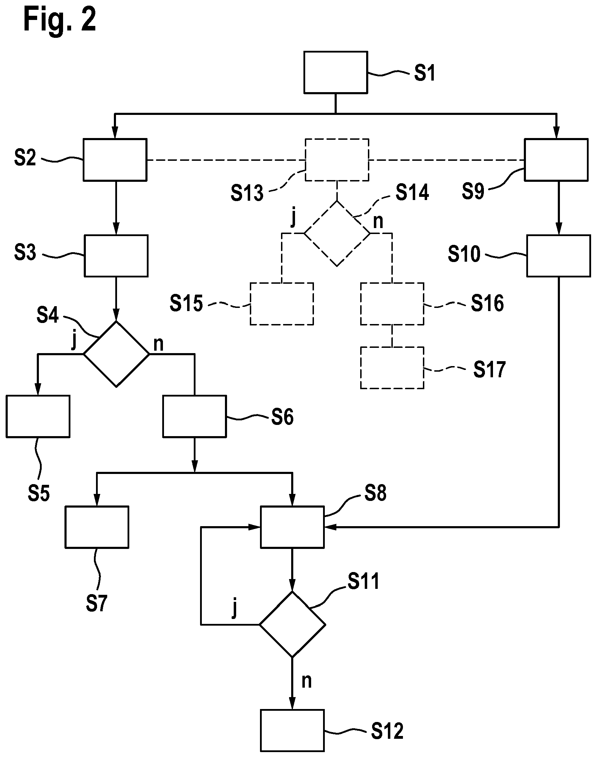

In dem in Figur 2 beispielhaft gezeigten Ablauf zur Bestimmung der Funktionsfähigkeit des Fahrerassistenzsystems 2 des Fahrzeugs 1 erfassen der Lichtsensor 3 und der Kamerasensor 4 in einem ersten Schritt S1 dieselbe äußere Umgebung. Dabei ermittelt in einem zweiten Schritt S2 der Lichtsensor 3 den ersten Helligkeitswert und der Kamerasensor 4 den zweiten Helligkeitswert. Der ermittelte erste Helligkeitswert und der ermittelte zweite Helligkeitswert werden in einem dritten Schritt S3 an das Steuergerät 5 übertragen und dort beispielsweise mittels eines Software-Algorithmus miteinander verglichen.

In einem vierten Schritt S4 vergleicht das Steuergerät 5 eine Abweichung zwischen dem ersten Helligkeitswert und dem zweiten Helligkeitswert mit einem vorgebbaren Grenzwert.

Ist die Abweichung zwischen dem ersten Helligkeitswert und dem zweiten Helligkeitswert kleiner als der Grenzwert (j), so stellt das Fahrerassistenzsystem 2 in einem fünften Schritt S5 fest, dass der Lichtsensor 3 und der Kamerasensor 4 fehlerfrei funktionieren.

Ist die Abweichung größer als der Grenzwert (n), so stellt das Fahrerassistenzsystem 2 in einem sechsten Schritt S6 fest, dass einer der Sensoren eine Fehlfunktion aufweist.

Um zu ermitteln, welcher der Sensoren die Fehlfunktion aufweist, führt das Steuergerät 5 eine Plausibilitätsprüfung durch. Dabei wird derjenige erste Helligkeitswert oder zweite Helligkeitswert als Referenzwert bestimmt, welcher genauer die Lichtverhältnisse der äußeren Umgebung des Fahrzeugs 1 wiedergibt und damit der plausiblere ist.

Liegen nur der erste und der zweite Helligkeitswert vor, so werden vorliegend in einem siebten Schritt S7 der erste und/oder der zweite Helligkeitswert mit einem Soll-Helligkeitswert verglichen. Der Soll-Helligkeitswert wird vorliegend in Abhängigkeit von Daten eines satellitengestützten Navigationssystems, das Ort, Uhrzeit und/oder Wetterdaten erfasst, ermittelt.

Beispielsweise werden Daten zu den Lichtverhältnissen, die zu bestimmten Uhrzeiten oder an bestimmten Orten herrschen, aus Datenbanken oder Tabellen entnommen, die in dem Steuergerät 5 hinterlegt sind und auf die das Steuergerät 5 zugreifen kann.

Stimmen beispielsweise der erste Helligkeitswert des Lichtsensors 3 und der Soll-Helligkeitswert miteinander überein, der zweite Helligkeitswert des Kamerasensors 4 und der Soll-Helligkeitswert jedoch nicht, so wird festgestellt, dass einerseits der erste Helligkeitswert der Referenzwert ist und dass andererseits der Kamerasensor 4 eine Fehlfunktion aufweist.

Stimmen andererseits beispielsweise der zweite Helligkeitswert des Kamerasensors 4 und der Soll-Helligkeitswert miteinander überein, der erste Helligkeitswert des Lichtsensors 3 und der Soll-Helligkeitswert jedoch nicht, so wird festgestellt, dass einerseits der zweite Helligkeitswert der Referenzwert ist und dass andererseits der Lichtsensor 3 eine Fehlfunktion aufweist. Erfindungsgemäß liegen mehr als nur der erste Helligkeitswert des Lichtsensors 3 und/oder der zweite Helligkeitswert des Kamerasensors 4 vor. In einem achten Schritt S8 führt das Steuergerät 5 die Plausibilitätsprüfung durch.

Dazu wird von dem zusätzlichen Lichtsensor 9 und/oder dem zusätzlichen Kamerasensor 10 ein zusätzlicher erster und/oder ein zusätzlicher zweiter Helligkeitswert in einem neunten Schritt S9 erfasst. Dabei sind der zusätzliche Lichtsensor 9 und der zusätzliche Kamerasensor 10 im Wesentlichen derselben äußeren Umgebung 8 des Fahrzeugs 1 zugeordnet und arbeiten bevorzugt redundant zu dem Lichtsensor 3 und zu dem Kamerasensor 4.

Der zusätzliche ermittelte erste Helligkeitswert und/oder der zusätzlich ermittelte zweite Helligkeitswert werden in einem zehnten Schritt S10 an das Steuergerät 5 übertragen und ausgewertet.

Daraufhin werden sie der Plausibilitätsprüfung in Schritt S8 zur Verfügung gestellt.

Die Plausibilitätsprüfung vergleicht den ersten und/oder zweiten Helligkeitswert mit dem zusätzlichen ersten Helligkeitswert und/oder mit dem zusätzlichen zweiten Helligkeitswert in einem elften Schritt S11. Bevorzugt weisen die Helligkeitswerte von Sensoren, die fehlerfrei funktionieren, eine Abweichung auf, die kleiner als der Grenzwert ist (j).

Ist die Abweichung zwischen zwei Helligkeitswerten größer als der Grenzwert, so wird in einem zwölften Schritt S12 an dem Sensor die Fehlfunktion festgestellt, dessen Helligkeitswert von jedem der anderen Helligkeitswerte abweicht (n).

Entspricht beispielsweise der zusätzliche erste Helligkeitswert dem ersten Helligkeitswert, so wird festgestellt, dass der zusätzliche Lichtsensor 9 und der Lichtsensor 3 fehlerfrei funktionieren. Zugleich stellt das Fahrerassistenzsystem 2 damit eine Fehlfunktion des Kamerasensors 4 fest.

Entspricht beispielsweise der zusätzliche zweite Helligkeitswert dem zweiten Helligkeitswert, so wird festgestellt, dass der zusätzliche Kamerasensor 10 und der Kamerasensor 4 fehlerfrei funktionieren. Zugleich stellt das Fahrerassistenzsystem 2 damit eine Fehlfunktion des Lichtsensors 3 fest.

Entspricht beispielsweise der zusätzliche zweite Helligkeitswert dem ersten Helligkeitswert, so wird festgestellt, dass der zusätzliche zweite Kamerasensor 10 und der erste Lichtsensor 3 fehlerfrei funktionieren. Zugleich stellt das Fahrerassistenzsystem 2 damit eine Fehlfunktion des Kamerasensors 4 fest.

Entsprechendes gilt, wenn der zusätzliche erste Helligkeitswert dem zweiten Helligkeitswert entspricht.

Optional zu dem Vergleich des ersten Helligkeitswerts mit dem zweiten Helligkeitswert in Schritt S3 bildet das Steuergerät 5 einen ersten Verlauf aus ersten Helligkeitswerten und einen zweiten Verlauf aus zweiten Helligkeitswerten und vergleicht den ersten Verlauf und den zweiten Verlauf, insbesondere eine erste Steigung des ersten Verlaufs mit einer zweiten Steigung des zweiten Verlaufs.

Stellt das Fahrerassistenzsystem 2 bei dem Vergleich eine wesentliche Abweichung zwischen den Verläufen fest, beispielsweise eine Abweichung, die von dem vorgebbaren Grenzwert abweicht, so schließt es dabei auf eine Fehlfunktion einer der Sensoren.

Hierbei ist es auch denkbar, dass für die Bestimmung des fehlerhaften Sensors entweder ein Verlauf aus Soll-Helligkeitswerten für den Vergleich hinzugezogen wird, oder es wird ein zusätzlicher Verlauf aus ersten und/oder zweiten Helligkeitswerten gemäß Schritt 9 und Schritt 10 erfasst und durch das Steuergerät 5 gebildet und für einen Vergleich hinzugezogen.

Gemäß eines weiteren Ausführungsbeispiels, welches im Folgenden gestrichelt dargestellt ist, werden die in S2 und S9 bestimmten ersten und/oder zweiten Helligkeitswerte und die zusätzlichen ersten und/oder zusätzlichen zweiten Helligkeitswerte in einem Schritt S13 gemeinsam in dem Steuergerät 5 ausgewertet. Insbesondere bestimmt das Steuergerät 5 bevorzugt einen ersten Mittelwert aus zumindest zwei ersten Helligkeitswerten und/oder einen zweiten Mittelwert aus zumindest zwei zweiten Helligkeitswerten.

Liegen der erste und der zweite Mittelwert vor, so vergleicht das Steuergerät 5 in einem Schritt S14 den ersten Mittelwert mit dem zweiten Mittelwert. Ist die Abweichung zwischen den beiden Mittelwerten kleiner als der Grenzwert (j), so wird in einem Schritt S15 festgestellt, dass beispielsweise die Lichtsensoren 3, 9 und die Kamerasensoren 4, 10 fehlerfrei funktionieren.

Ist die Abweichung größer als der Grenzwert (n), so stellt das Fahrerassistenzsystem 2 in einem Schritt S16 fest, dass zumindest einer der Sensoren eine Fehlfunktion aufweist.

Dann wird bevorzugt der erste Mittelwert mit einem zweiten Helligkeitswert oder der zweite Mittelwert mit einem ersten Helligkeitswert verglichen um den fehlerhaften Sensor festzustellen.

Um das Verfahren beispielhaft zu beschreiben, bestehen vorliegend der erste Mittelwert aus den einzelnen ersten Helligkeitswerten A und B und der zweite Mittelwert aus den einzelnen zweiten Helligkeitswerten C und D. Dabei sollen A und B von fehlerfreien Lichtsensoren 3, 9 erfasst werden.

Weicht der erste Mittelwert von dem zweiten Mittelwert ab, so wird gemäß dem Beispiel zumindest ein einzelner zweiter Helligkeitswert C oder D, bevorzugt jeder einzelne zweite Helligkeitswert C, D, mit dem ersten Mittelwert verglichen.

Selbstverständlich ist ein Vergleich des zweiten Mittelwerts mit zumindest einem ersten Helligkeitswert A, B auch möglich.

Ist der erste Mittelwert gleich einem der zweiten Helligkeitswerte, ist er also beispielsweise gleich C, so wird festgestellt, dass sowohl die Lichtsensoren 3, 9 als auch der einzelne Kamerasensor 4, der den zweiten Helligkeitswert C erfasst, fehlerfrei funktionieren.

Ist die Abweichung des ersten Mittelwerts zu einem der zweiten Helligkeitswerte größer als der Grenzwert, ist also beispielsweise die Abweichung des ersten Mittelwerts zu D größer als der Grenzwert, so wird festgestellt, dass der Kamerasensor 10, der den zweiten Helligkeitswert D erfasst, eine Fehlfunktion aufweist.

Wird der zweite Mittelwert, der aus den einzelnen zweiten Helligkeitswerten C und D gebildet ist, wobei D von einem fehlerhaften Kamerasensor 10 erfasst wird, mit jedem einzelnen ersten Helligkeitswert A, B verglichen, so wird bei jedem Vergleich eine Abweichung, die größer als der Grenzwert ist, festgestellt.

Da hierdurch gemäß dem vorliegenden Beispiel der fehlerhafte Sensor nicht festgestellt wird, führt das Steuergerät 5 in einem Schritt S17 bevorzugt beide Vergleichsrichtungen durch. Dabei wird sowohl der erste Mittelwert mit einzelnen zweiten Helligkeitswerten als auch der zweite Mittelwert mit einzelnen ersten Helligkeitswerten verglichen und dadurch der Sensor mit der Fehlfunktion festgestellt.

Der fehlerhafte Kamerasensor 4 wird dann gemäß dem vorliegenden Beispiel bevorzugt nach dem oben beschriebenen Vergleich des ersten Mittelwerts mit den einzelnen zweiten Helligkeitswerten C, D festgestellt.

Optional ist es auch möglich, den fehlerhaften Kamerasensor 4 durch einen Vergleich der zweiten Helligkeitswerte C, D mit einem Soll-Helligkeitswert gemäß Schritt S7 festzustellen.

Sollen die zweiten Helligkeitswerte C, D mit einzelnen, zusätzlichen ersten oder zweiten Helligkeitswerten verglichen werden, so erfolgt die Feststellung des fehlerhaften Sensors gemäß des weiter oben beschriebenen Schrittes S8. Aus einem Vergleich der Mittelwerte wird dann wieder ein Vergleich der einzelnen Helligkeitswerte.

## Patentansprüche

1. Verfahren zum Bestimmen der Funktionsfähigkeit eines Fahrerassistenzsystems (2) eines Fahrzeugs (1), insbesondere Kraftfahrzeugs, wobei das Fahrerassistenzsystem (2) wenigstens einen Lichtsensor (3, 9) und wenigstens einen Kamerasensor (4, 10) aufweist, die an dem Fahrzeug (1) zum Erfassen derselben Umgebung ausgerichtet sind, wobei zumindest ein durch den Lichtsensor (3, 9) ermittelter erster Helligkeitswert mit zumindest einem durch den Kamerasensor (4, 10) ermittelten zweiten Helligkeitswert verglichen wird, und dass durch den Vergleich der Helligkeitswerte die Funktionsfähigkeit des Fahrerassistenzsystems (2) bestimmt wird, **dadurch gekennzeichnet, dass** die erfassten Helligkeitswerte von zumindest zwei Lichtsensoren (3, 9) und/oder von zumindest zwei Kamerasensoren (4, 10) jeweils miteinander verglichen werden, und dass dann, wenn bei dem Vergleich eine Abweichung der erfassten Helligkeitswerte zueinander erkannt wird, die kleiner als ein vorgebbarer Grenzwert ist, auf die Funktionsfähigkeit der Lichtsensoren (3, 9) beziehungsweise der Kamerasensoren (4, 10) erkannt wird.

2. Verfahren nach Anspruch 1, **dadurch gekennzeichnet, dass** ein erster Verlauf von ersten zeitlich nacheinander erfassten Helligkeitswerten des Lichtsensors (3, 9) und ein zweiter Verlauf von zweiten zeitlich nacheinander erfassten Helligkeitswerten des Kamerasensors (4, 10) ermittelt und miteinander verglichen werden, um die Funktionsfähigkeit des Fahrerassistenzsystems (2) zu bestimmen.

3. Verfahren nach Anspruch 2, **dadurch gekennzeichnet, dass** bei dem Vergleich der Verläufe nur dann auf die Funktionsfähigkeit des Fahrerassistenzsystems (2) erkannt wird, wenn die Verläufe zur gleichen Zeit eine gleiche Steigungsänderung aufweisen.

4. Verfahren nach einem der vorhergehenden Ansprüche, **dadurch gekennzeichnet, dass** aus den von zumindest zwei Lichtsensoren (3, 9), die zu der Erfassung derselben Umgebung ausgerichtet sind, gleichzeitig erfassten ersten Helligkeitswerten ein erster Mittelwert bestimmt wird.

5. Verfahren nach einem der vorhergehenden Ansprüche, **dadurch gekennzeichnet, dass** aus den von zumindest zwei Kamerasensoren (4, 10), die zu der Erfassung derselben Umgebung ausgerichtet sind, gleichzeitig erfassten zweiten Helligkeitswerten ein zweiter Mittelwert bestimmt wird.

6. Verfahren nach einem der vorhergehenden Ansprüche, **dadurch gekennzeichnet, dass** in Abhängigkeit von Daten eines satellitengestützten Navigationssystems und/oder einer aktuellen Uhrzeit ein Soll-Helligkeitswert ermittelt wird, und dass der erste Helligkeitswert und/oder der zweite Helligkeitswert mit dem Soll-Helligkeitswert verglichen wird, um die Funktionsfähigkeit des Fahrerassistenzsystems (2) zu bestimmen.

7. Vorrichtung zum Betreiben eines Fahrerassistenzsystems (2) eines Fahrzeugs (1), insbesondere Kraftfahrzeugs, **gekennzeichnet durch** ein speziell hergerichtetes Steuergerät (5), das für eine Übertragung von Helligkeitswerten an das Steuergerät (5) eingerichtet ist, welche von zumindest einem ersten Lichtsensor (3), einem ersten Kamerasensor (4) und zumindest einem weiteren Lichtsensor (9) und/oder Kamerasensor (10) erfasst werden, wobei das Steuergerät (5) darüber hinaus zur Bestimmung der Funktionsfähigkeit des Fahrerassistenzsystems (2) durch Vergleiche dieser Helligkeitswerte gemäß des Verfahrens nach einem der Ansprüche 1 bis 6 eingerichtet ist.

8. Fahrerassistenzsystem (2) für ein Fahrzeug (1), insbesondere Kraftfahrzeug, wobei das Fahrerassistenzsystem (2) wenigstens einen Lichtsensor (3) und wenigstens einen Kamerasensor (4) und zumindest einen zusätzlichen Lichtsensor (9) und/oder zumindest einen zusätzlichen Kamerasensor (10) aufweist, die an dem Fahrzeug (1) zum Erfassen derselben Umgebung ausgerichtet sind, mit einer Vorrichtung nach Anspruch 7.

9. Fahrzeug (1), insbesondere Kraftfahrzeug, mit einem Fahrerassistenzsystem (2) nach Anspruch 8.

## Claims

1. Method for determining the functional capability of a driver assistance system (2) of a vehicle (1), in particular of a motor vehicle, wherein the driver assistance system (2) has at least one light sensor (3, 9) and at least one camera sensor (4, 10) which are aligned on the vehicle (1) in order to sense the same surroundings, wherein at least one fist brightness value, which is determined by the light sensor (3, 9), is compared with at least one second brightness value, which is determined by the camera sensor (4, 10), and in that the functional capability of the driver assistance system (2) is determined by means of the comparison of the brightness values, **characterized in that** the acquired brightness values of at least two light sensors (3, 9) and/or of at least two camera sensors (4, 10) are respectively compared with one another, and **in that** when a deviation of the acquired brightness values with respect to one another, which is smaller than a predefinable limiting value, is detected during the comparison, it is detected that the light sensors (3, 9) or the camera sensors (4, 10) are functionally capable.

2. Method according to Claim 1, **characterized in that** a first profile of the first brightness values, acquired in chronological succession, of the light sensor (3, 9) and a second profile of the second brightness values, acquired in chronological succession, of the camera sensor (4, 10) are determined and compared with one another in order to determine the functional capability of the driver assistance system (2).

3. Method according to Claim 2, **characterized in that** when the profiles are compared, it is detected that the driver assistance system (2) is functionally capable only if the profiles have an identical change in gradient at the same time.

4. Method according to one of the preceding claims, **characterized in that** a first mean value is determined from the first brightness values which are acquired simultaneously by at least two light sensors (3, 9) which are aligned in order to sense the same surroundings.

5. Method according to one of the preceding claims, **characterized in that** a second mean value is determined from the second brightness values which are acquired simultaneously by at least two camera sensors (4, 10) which are aligned in order to sense the same surroundings.

6. Method according to one of the preceding claims, **characterized in that** a setpoint brightness value is determined in accordance with data from a satellite-based navigation system and/or a current time, and **in that** the first brightness value and/or the second brightness value are/is compared with the setpoint brightness value in order to determine the functional capability of the driver assistance system (2).

7. Device for operating a driver assistance system (2) of a vehicle (1), in particular of a motor vehicle, **characterized by** a specially customized control unit (5) which is configured to transmit brightness values to the control unit (5), which values are acquired by at least a first light sensor (3), a first camera sensor (4) and at least a further light sensor (9) and/or camera sensor (10), wherein the control unit (5) is also configured to determine the functional capability of the driver assistance system (2) by comparing these brightness values in accordance with the method according to one of Claims 1 to 6.

8. Driver assistance system (2) for a vehicle (1), in particular a motor vehicle, wherein the driver assistance system (2) has at least one light sensor (3) and at least one camera sensor (4) and at least one additional light sensor (9) and/or at least one additional camera sensor (10) which are aligned on the vehicle (1) in order to sense the same surroundings, with a device according to Claim7.

9. Vehicle (1), in particular a motor vehicle, having a driver assistance system (2) according to Claim 8.

## Revendications

1. Procédé pour déterminer la capacité de fonctionnement d'un système d'assistance à la conduite (2) d'un véhicule (1), notamment d'un véhicule à moteur, dans lequel le système d'assistance à la conduite (2) comporte au moins un capteur de lumière (3, 9) et au moins un capteur de caméra (4, 10) qui sont disposés sur le véhicule (1) de manière à détecter le même environnement, dans lequel au moins une première valeur de luminosité déterminée par le capteur de lumière (3, 9) est comparée à au moins une seconde valeur de luminosité déterminée par le capteur de caméra (4, 10), et en ce que la capacité de fonctionnement du système d'assistance à la conduite (2) est déterminée par la comparaison des valeurs de luminosité,
**caractérisé en ce que** les valeurs de luminosité détectées d'au moins deux capteurs de lumière (3, 9) et/ou d'au moins deux capteurs de caméra (4, 10) sont comparées les unes aux autres et **en ce que**, si la comparaison révèle un écart des valeurs de luminosité détectées les unes par rapport aux autres qui est inférieur à une valeur limite pouvant être prédéterminée, la capacité de fonctionnement des capteurs de lumière (3, 9) ou des capteurs de caméra (4, 10) est détectée.

2. Procédé selon la revendication 1, **caractérisé en ce qu'**une première courbe de premières valeurs de luminosité des deux capteurs de lumière (3, 9) qui sont successivement détectées dans le temps et une seconde courbe de secondes valeurs de luminosité du capteur de caméra (4, 10) qui sont successivement détectées dans le temps sont déterminées et comparées l'une à l'autre afin de déterminer la capacité de fonctionnement du système d'assistance à la conduite (2).

3. Procédé selon la revendication 2, **caractérisé en ce que** la comparaison des courbes ne révèle la capacité de fonctionnement du système d'assistance à la conduite (2) que si les courbes présentent en même temps la même variation de pente.

4. Procédé selon l'une des revendications précédentes, **caractérisé en ce qu'**une première valeur moyenne est déterminée à partir des premières valeurs de luminosité détectées simultanément par au moins deux capteurs de lumière (3, 9) qui sont disposés de manière à détecter le même environnement.

5. Procédé selon l'une des revendications précédentes, **caractérisé en ce qu'**une seconde valeur moyenne est déterminée à partir des secondes valeurs de luminosité détectées simultanément par au moins deux capteurs de caméra (4, 10) disposés de manière à détecter le même environnement.

6. Procédé selon l'une des revendications précédentes, **caractérisé en ce qu'**une valeur de luminosité de consigne est déterminée en fonction de données d'un système de navigation par satellite et/ou d'une heure actuelle, et **en ce que** la première valeur de luminosité et/ou la seconde valeur de luminosité est/sont comparée(s) à la valeur de luminosité de consigne afin de déterminer la capacité de fonctionnement du système d'assistance à la conduite (2).

7. Dispositif pour le fonctionnement d'un système d'assistance à la conduite (2) d'un véhicule (1), notamment d'un véhicule à moteur, **caractérisé par** un appareil de commande (5) spécialement conçu, qui est configuré pour transmettre à l'appareil de commande (5) des valeurs de luminosité qui sont détectées par au moins un premier capteur de lumière (3), un premier capteur de caméra (4) et au moins un autre capteur de lumière (9) et/ou capteur de caméra (10), dans lequel l'appareil de commande (5) est en outre conçu pour déterminer la capacité de fonctionnement du système d'assistance à la conduite (2) en comparant lesdites valeurs de luminosité conformément au procédé selon l'une des revendications 1 à 6.

8. Système d'assistance à la conduite (2) destiné à un véhicule (1), notamment à un véhicule à moteur, dans lequel le système d'assistance à la conduite (2) comporte au moins un capteur de lumière (3) et au moins un capteur de caméra (4) et au moins un capteur de lumière supplémentaire (9) et/ou au moins un capteur de caméra supplémentaire (10), qui sont disposés sur le véhicule (1) de manière à détecter le même environnement, comprenant un dispositif selon la revendication 7.

9. Véhicule (1), notamment véhicule à moteur, comprenant un système d'assistance à la conduite (2) selon la revendication 8.
